Europäisches Patentamt

European Patent Office

Office européen des brevets

(19)

(11) Numéro de publication : **0 086 710 B1**

(12) **FASCICULE DE BREVET EUROPÉEN**

(45) Date de publication du fascicule du brevet :
01.10.86

(21) Numéro de dépôt : 83400282.6

(22) Date de dépôt : 10.02.83

(51) Int. Cl.⁴ : **F 02 C 9/00**, F 15 B 15/06, G 06 G 3/06

(54) **Dispositif de commande d'une came à trois dimensions utilisable notamment comme partie d'un calculateur d'une fonction de plusieurs variables.**

(30) Priorité : 12.02.82 FR 8202289

(43) Date de publication de la demande :
24.08.83 Bulletin 83/34

(45) Mention de la délivrance du brevet :
01.10.86 Bulletin 86/40

(84) Etats contractants désignés :
DE FR GB

(56) Documents cités :
FR-A- 1 326 999
FR-A- 2 418 892
GB-A- 657 131
GB-A- 2 054 744
US-A- 1 757 046
US-A- 2 415 157
US-A- 2 783 942
US-A- 2 893 210
US-A- 2 942 496
US-A- 3 766 831
US-A- 3 866 416
MACHINE DESIGN, vol. 21, no. 1, avril 1949, pages 127-132, Cleveland (US); J. A. HRONES: "Key factors in Cam design and application"
K.RAUH: "Praktische Getriebelehre", vol. 2, 1939, pages 59-61,66, Verlag von Julius Springer, Berlin (DE);

(73) Titulaire : **SOCIETE NATIONALE D'ETUDE ET DE CONSTRUCTION DE MOTEURS D'AVIATION, "S.N.E.C.M.A."**
2 Boulevard Victor
F-75015 Paris (FR)

(72) Inventeur : **D'Agostino, Guy**
1, rue Molière
F-94400 Vitry (FR)
Inventeur : **Dhainaut, André**
117 F Avenue Colonel Fabien
F-77190 Dammarie Les Lys (FR)
Inventeur : **Maillard, Claude Marcel Joseph**
3, rue des Aubépines
F-77870 Vulaines sur Seine (FR)

(74) Mandataire : **Moinat, François**
S.N.E.C.M.A. Service des Brevets Boîte Postale 81
F-91003 Evry Cedex (FR)

## Description

La présente invention concerne un élément hydromécanique de régulateur d'une turbomachine comportant un dispositif de commande d'une came à trois dimensions, utilisable notamment comme partie d'un calculateur d'une fonction de deux grandeurs résultant de plusieurs variables de la turbomachine.

On sait que la régulation d'une turbomachine nécessite un calculateur complexe, capable entre autres de calculer une ou plusieurs fonctions de plusieurs variables, qui peuvent être des paramètres physiques divers, tels que des températures, des débits, le régime de la turbine... etc.

On connaît déjà des calculateurs de fonctions de plusieurs variables, de différents types, notamment des calculateurs purement électroniques ; ils offrent l'inconvénient de n'admettre que des grandeurs d'entrée de nature électrique, alors que le dispositif de commande selon la présente invention admet des grandeurs d'entrée — les variables — d'une nature fluidique — hydraulique ou pneumatique — tandis que la grandeur de sortie — la fonction — est un déplacement en translation, qui peut être aisément converti en une grandeur d'une autre nature physique quelconque.

US-A-2 415 157 montre un exemple d'utilisation d'une came tridimensionnelle dans un calculateur dans lequel la came est, d'une part, montée sur un arbre et, d'autre part, solidaire à une extrémité d'un écrou, l'arbre étant entraîné en rotation par un moteur électrique par l'intermédiaire d'un système d'engrenages et l'écrou se déplaçant en translation sur une vis entraînée par une roue reliée à un moteur électrique.

GB-A-2 054 744 décrit un dispositif de commande d'une came à trois dimensions dans lequel la came est montée sur un arbre qui est solidaire à une extrémité d'un piston se déplaçant en translation dans un cylindre et qui porte sur une autre partie un pignon entraîné en rotation par une crémaillère solidaire d'un autre piston dans un cylindre.

Le brevet US-A-2 893 210 décrit l'association, dans un même cylindre fixe, d'un piston communiquant des déplacements rectilignes à une tige, avec une sorte de vérin rotatif, comportant deux chambres ; le remplissage de l'une ou l'autre de ces chambres avec un fluide sous pression produit la rotation d'une douille immobilisée en translation par rapport à ladite tige, mais solidaire de celle-ci en rotation.

Ce dispositif connu, qui comporte un vérin à action rectiligne combiné avec un vérin rotatif, pourrait être utilisé pour la mise en œuvre de la présente invention, en montant la came à trois dimensions, c'est-à-dire notamment la pièce cylindrique sur laquelle cette came est montée ou réalisée, à l'extrémité de la tige du vérin composite, qui sort du carter de ce vérin. La réalisation ainsi obtenue, qui pourrait cependant être intéressante pour certaines applications, offrirait toutefois une compacité insuffisante pour son emploi dans le régulateur d'une turbomachine, puisque la came et son palpeur seraient nécessairement montés dans le prolongement du cylindre fixe du vérin composite.

D'autres vérins à fluide de type composite sont connus, par exemple, des documents FR-A 1 326 999 ou US-A 3 766 831. Ces solutions utilisent un arbre mobile porteur de la came d'où il résulte un encombrement inacceptable, une disposition éventuelle de came en porte à faux et dans tous les cas une précision insuffisante provenant de l'introduction de nombreux jeux mécaniques. Par ailleurs, les alimentations hydrauliques proposées imposent des liaisons en mouvement ou des risques d'encrassement nuisant à la fiabilité.

Ces inconvénients des dispositifs connus soit faisant appel à des grandeurs d'entrée de nature électrique soit présentant des encombrements préjudiciables ou des défauts de précision et de fiabilité sont évités par l'élément hydromécanique de régulateur d'une turbomachine selon l'invention comportant un dispositif de commande d'une came à trois dimensions qui est du type précité, cette came étant matérialisée par les reliefs d'une surface sensiblement cylindrique solidaire, d'une part, d'un moyen actionné par des moyens moteurs produisant un déplacement indépendant de la came en rotation autour de l'axe longitudinal du dispositif, en regard d'au moins un palpeur sous l'influence d'une première grandeur et, d'autre part, d'un moyen actionné par des moyens moteurs produisant un déplacement indépendant de la came en translation dans la direction dudit axe sous l'influence d'une deuxième grandeur, lesdits moyens moteurs comportant un vérin ayant une tige centrale le traversant complètement et en appui en ses extrémités sur la structure fixe environnante.

Cet élément hydromécanique de régulateur d'une turbomachine est caractérisé en ce que la surface cylindrique matérialisant la came est constituée par la surface externe d'un corps de vérin linéaire composant avec un vérin rotatif disposé à l'intérieur du corps du vérin linéaire auquel il sert de piston et à l'intérieur duquel il délimite deux chambres étanches, un vérin à fluide de type composite qui constitue lesdits moyens moteurs et ladite tige centrale fixe étant commune, supportant les corps des deux vérins, que le corps du vérin rotatif et le corps du vérin linéaire sont solidarisés en rotation au moyen d'une clavette et d'une rainure qui laissent aux deux corps de vérin une liberté de translation relative, que le corps du vérin rotatif est immobilisé en translation par rapport à la tige centrale fixe au moyen de cloisons radiales en nombre pair, solidaires de la tige centrale, prenant appui sur les parois extrêmes du corps du vérin rotatif et délimitant avec des cloisons radiales solidaires du corps du vérin rotatif, disposées alternativement, des chambres de commande étanches en nombre égal au nombre de cloisons et en ce que des moyens associés commandent de manière indépendante respectivement des moyens d'alimentation en fluide, d'une part, vers lesdites chambres de commande du vérin rotatif et, d'autre part, vers lesdites chambres du vérin linéaire, lesdits moyens d'alimentation étant des canalisations reliant lesdites chambres sélectivement avec une source de fluide sous pression ou avec une conduite de vidange et acheminant le fluide entièrement au travers de la tige centrale fixe.

Cette forme de réalisation de l'invention est particulièrement avantageuse dans la mesure notamment où la came à trois dimensions et le palpeur correspondant sont disposés au niveau même du vérin composite, et notamment du cylindre du vérin à action rectiligne, ce qui accroît considérablement la compacité du dispositif obtenu par rapport à la compacité du dispositif utilisant le vérin composite selon le brevet US-A-2 893 210, mentionné précédemment.

A titre d'exemple, on a décrit ci-dessous et illustré schématiquement au dessin annexé une forme de réalisation préférée de l'élément hydromécanique selon la présente invention.

La figure 1 est un shéma théorique, sur lequel cette forme de réalisation a été représentée en coupe par un plan axial, suivant la ligne I-I de la figure 2.

La figure 2 est une vue en coupe suivant la ligne II-II de la figure 1.

La figure 3 est une vue de détail de cette forme de réalisation de l'invention, en coupe partielle suivant un plan axial, suivant la ligne III-III de la figure 4.

La figure 4 est une vue en coupe suivant la ligne IV-IV de la figure 3.

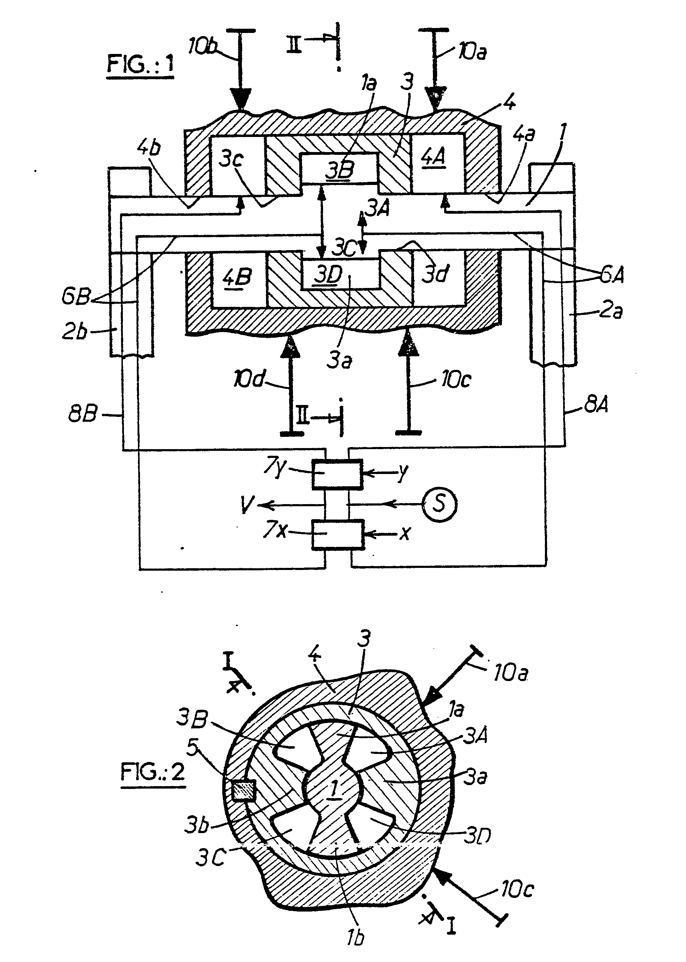

Sur le schéma théorique des figures 1 et 2, 1 désigne un axe fixe dont les deux extrémités sont fixées respectivement dans des supports 2a et 2b. L'axe fixe 1 comporte deux nervures radiales, externes, 1a et 1b, diamétralement opposées l'une à l'autre. 3 désigne un cylindre de vérin rotatif, qui est monté librement tournant sur l'axe fixe 1, constituant une tige centrale, et ses nervu-res, 1a et 1b, et qui comporte également deux nervures radiales, internes, 3a et 3b, diamétralement opposées l'une à l'autre et coopérant avec l'axe fixe 1, entre ses nervures 1a et 1b, de façon à délimiter, entre lesdites nervures formant des cloisons radiales 1a, 1b, 3a, 3b, quatre chambres étanches 3A à 3D (figure 2). L'étanchéité de ces quatre chambres est assurée par des moyens connus, qu'il n'est pas nécessaire de décrire en détail, au niveau des surfaces de contact entre les nervures externes, 1a et 1b, de l'axe fixe 1, et la surface cylindrique interne du vérin rotatif 3, des surfaces de contact entre les nervures internes, 3a et 3b, dudit vérin rotatif 3 et l'axe fixe 1, entre ses nervures 1a et 1b, des surfaces de contact entre ledit axe 1 et des alésages, 3c et 3d, aménagés dans les deux parois extrêmes du vérin rotatif 3, et des surfaces de contact entre les faces internes desdites parois extrêmes du vérin rotatif 3 et les extrémités correspondantes des nervures 1a et 1b de l'axe 1. Ces moyens d'étanchéité connus sont choisis évidemment de manière à permettre la libre rotation du vérin rotatif 3 autour de l'axe 1 et de ses nervures 1a et 1b. 4 désigne un cylindre de vérin à action rectiligne, ou vérin linéaire, qui est plus long que le cylindre rotatif 3, et qui est monté librement coulissant sur ledit vérin rotatif 3 et librement tournant sur l'axe fixe 1, de façon à délimiter avec eux deux chambres étanches, 4A et 4B. L'étanchéité de ces deux chambres est assurée par des moyens connus, choisis de façon à permettre la libre rotation du cylindre 4 sur l'axe fixe 1, au niveau des alésages 4a et 4b, aménagés dans ses parois extrêmes ; 5 désigne une clavette qui immobilise le cylindre 4 en rotation par rapport au cylindre 3 tout en permettant leurs coulissements relatifs.

Chacune des paires de chambres 3A-3C et 3B-3D est reliée par une canalisation 6A ou 6B à deux accès d'une servo-commande hydraulique 7x, dont deux autres accès sont reliés respectivement à une source de liquide hydraulique sous pression S, et à une conduite de vidange V, la servo-commande 7x comportant en outre une entrée pour la première variable x, qui peut y être appliquée sous une forme physique appropriée, mais largement arbitraire (déplacement mécanique, pression de fluide, grandeur électrique... etc) ; comme visible sur la figure 1, chacune des canalisations 6A et 6B traverse respectivement l'axe fixe 1, dans des directions sensiblement axiales, ainsi que les supports 2a et 2b. De même, des canalisations 8A et 8B relient respectivement les chambres 4A et 4B à deux accès d'une servo-commande 7y, dont deux autres accès sont également raccordés à la source S et à la conduite de vidange V et qui comporte une entrée y appliquée sous une forme physique appropriée mais largement arbitraire.

Dans la forme de réalisation illustrée, la surface latérale du cylindre 4 du vérin à action linéaire a été usinée, ou bien est venue de moulage avec des reliefs tridimensionnels, dont l'ensemble constitue une came à trois dimensions ; les reliefs superficiels de cette dernière peuvent être captés par des palpeurs tels que 10a à 10d.

Le dispositif selon la présente invention, qui vient d'être décrit, fonctionne de la façon suivante.

On va supposer par exemple que les positions initiales respectives du vérin rotatif 3 et du vérin à action rectiligne 4 sont telles que les chambres 3A, 3C et 4A ont des volumes sensiblement nuls, ou tout au moins minimaux. Par convention, ces positions initiales des deux vérins peuvent correspondre à des valeurs fixes, mais arbitraires, des variables x et y, par exemple à leurs valeurs 0. Si par exemple la variable x croît à partir de sa valeur initiale, la servo-commande 7x établit des liaisons directes, d'une part entre la source de liquide hydraulique sous pression S et la canalisation 6A, et, d'autre part, entre la canalisation 6B et la conduite de vidange V ; le liquide hydraulique sous pression que la canalisation 6A amène dans les chambres 3A et 3C exerce des couples moteurs de même sens (de sens horaire sur la figure 2) sur les nervures internes 3a et 3b du cylindre du vérin rotatif 3, qui est ainsi entraîné en rotation autour de l'axe fixe 1 jusqu'à ce que, par exemple, la variable x cesse de croître ; les volumes initiaux des deux chambres 3A et 3C ont ainsi augmentés, à partir de leurs valeurs minimales respectives, jusqu'à des valeurs finales, proportionnelles respectivement à l'accroissement de la variable x, tandis que, simultanément, les volumes des chambres 3B et 3D, qui étaient initialement maximaux, ont été réduits chacun dans la même proportion, une fraction correspondante du liquide hydraulique contenu dans lesdites chambres 3B et 3D étant refoulée par la canalisation 6B et la servo-commande 7x vers la conduite de vidange V. Si, à partir de la valeur précédemment atteinte, la variable x diminue, la servo-commande 7x met aussitôt les chambres 3A et 3C en communication avec la conduite de vidange V et les chambres 3B et 3D avec la source de liquide hydraulique S, si bien que le cylindre du vérin rotatif 3 tourne en sens inverse jusqu'à ce que la variable x cesse de décroître. Lorsque la seconde variable y, croît à partir de sa valeur initiale, la servo-commande 7y relie, d'une part, la chambre 4A, par la canalisation 8A, à la source de liquide hydraulique sous pression S, et, d'autre part, la chambre 4B, par la canalisation 8B, à la conduite de vidange V. Le liquide hydraulique sous pression introduit dans la chambre 4A exerce une force résultante axiale sur sa paroi interne droite (sur la figure 1), qui a pour effet de faire coulisser le cylindre du vérin à action rectiligne 4 par rapport au vérin 3 et à l'axe 1, également vers la droite de la figure 1 ; il en résulte un accroissement du volume de la chambre 4A et une diminution du volume de la chambre 4B, à partir de sa valeur initiale, maximale, une fraction du liquide hydraulique contenu dans cette chambre 4B étant alors refoulée par la canalisation 8B vers la conduite de vidange V. Lorsque la variable y cesse de croître, le vérin 4 s'immobilise à une distance de sa position initiale sensiblement proportionnelle à l'accroissement de la variable y ; en cas de décroissance de cette dernière, le vérin 4 se déplace vers la gauche de la figure 1. Comme par ailleurs, le vérin à action rectiligne 4 a été entraîné en rotation par le vérin rotatif 3, on comprend que chaque palpeur tel que 10a, fixe par rapport à l'axe 1, présente, à un instant donné, des coordonnées cylindriques par rapport à la came à trois dimensions, qui sont respectivement proportionnelles aux valeurs instantanées des variables x — pour la coordonnée périphérique — et y pour la coordonnée axiale. Si la came à trois dimensions portée par la surface latérale du vérin 4 a été dimensionnée de façon que sa dimension radiale, z, soit une fonction mathématique déterminée $f(x,y)$ des variables x, y, on comprend que la grandeur captée par le palpeur fixe 10a, qui varie linéairement avec la coordonnée radiale z, est effectivement proportionnelle à la valeur de la fonction $f(x,y)$ pour les valeurs instantanées des variables x, y appliquées aux entrées correspondantes des servo-commandes 7x et 7y.

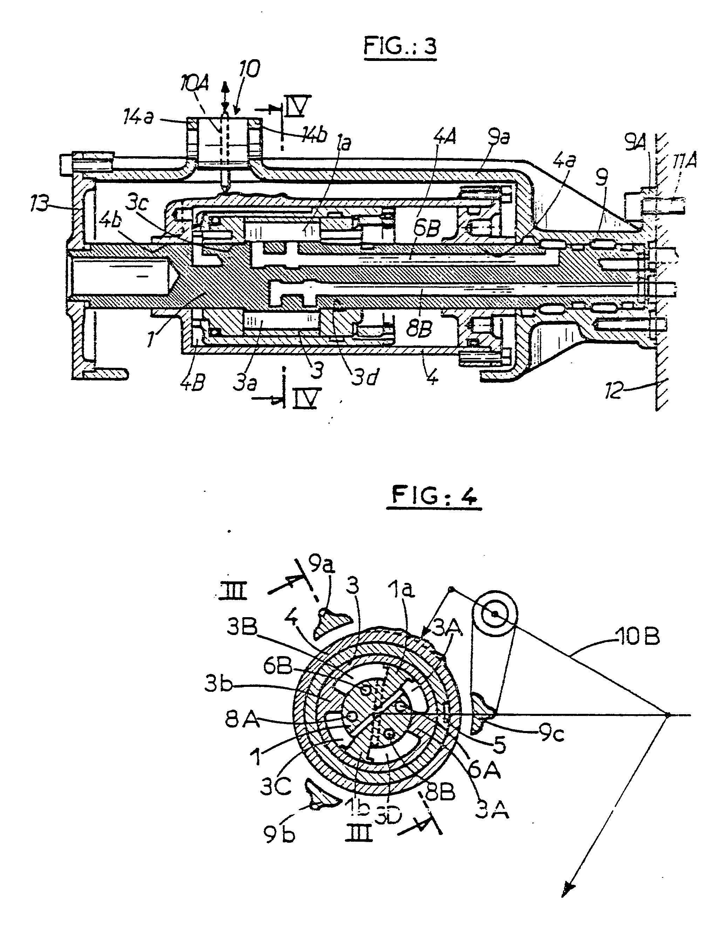

Dans la réalisation pratique de l'invention qui est illustrée en détail sur les figures 3 et 4, on retrouve, avec les mêmes références que sur les figures 1 et 2, les différents organes et composants précédemment décrits, à l'exception des servo-commandes 7x et 7y. On a représenté par contre, sur les figures 3 et 4, trois barres 9a, 9b et 9c, dont les extrémités droites (sur la figure 3) sont solidaires d'un manchon 9, à l'intérieur duquel est fixée l'extrémité correspondante de l'axe fixe 1, ce manchon 9 étant muni lui-même, à son extrémité droite, de trois brides, telles que 9A, pour le passage de vis, telles que 11A, servant à la fixation de l'ensemble du dispositif de commande par exemple à une paroi 12. Les extrémités gauches des trois barres-supports 9a à 9c sont d'autre part réunies à l'extrémité correspondante de l'axe fixe 1 par un organe transversal 13. A l'une au moins des barres-supports, par exemple à la barre 9a, est fixé, par exemple par l'intermédiaire de brides 14a et 14b, un palpeur 10 qui, dans l'exemple de réalisation illustré, comporte une tige 10A montée coulissante dans une direction radiale, fixe par rapport à l'axe fixe 1, de manière que l'extrémité de la tige 10A du palpeur 10 soit appliquée élastiquement contre la surface de la came à trois dimensions, matérialisée par la surface latérale externe du cylindre 4.

Comme représenté schématiquement sur la figure 4, le palpeur 10 peut en variante, comporter un levier 10B articulé autour d'un axe fixe, par rapport à l'axe fixe 1, ce levier étant rappelé élastiquement pour que le palpeur suive le profil de la came.

La présente invention n'est pas limitée à la forme de réalisation précédemment décrite ; elle englobe toutes ses variantes. Les nombres des nervures radiales, respectivement externes et internes, de l'axe fixe 1 et du vérin rotatif 3 sont matières à option ; chacun des organes 1 et 3 pourrait comporter par exemple une seule nervure, de façon à délimiter seulement deux chambres dans le vérin rotatif. Le vérin à action rectiligne 4 pourrait être du type à simple effet, à condition de prévoir des moyens connus de rappel. Bien entendu, l'un au moins des deux vérins 3 et 4 pourrait être alimenté avec de l'air comprimé. Le nombre et la réalisation des différents palpeurs tels que 10 (figure 3) sont matières à option. Dans le cas d'un palpeur équipé d'une tige coulissante telle que 10A (figure 3) ou d'un levier tel que 10B (figure 4), on peut prévoir de faire agir la tige coulissante ou le levier sur un transducteur, qui transforme ses déplacements rectilignes en une autre grandeur physique, de nature appropriée, par exemple une grandeur électrique.

On a supposé, dans ce qui précède, que les grandeurs d'entrée x et y étaient des fonctions d'une seule variable. Bien entendu on ne sortirait pas non plus du cadre de la présente invention si les grandeurs d'entrée x et/ou y étaient des fonctions obtenues d'un générateur de fonctions à partir de plusieurs variables, et notamment si l'une et/ou l'autre des grandeurs d'entrée x et y étai(en)t la grandeur de sortie d'une (ou plusieurs) came(s) à trois dimensions.

Le dispositif de commande d'une came à trois dimensions selon la présente invention est susceptible d'applications différentes de celle précédemment indiquée, et, notamment, de toutes les applications des cames purement mécaniques, à trois dimensions. En particulier, il est possible de faire varier au cours du temps les variables x, y de telle façon que le palpeur fixe « explore » la came à trois dimensions suivant une trajectoire continue, régulière, par exemple en hélice ou bien suivant des génératrices raccordées par des arcs d'hélice, de telle sorte que la variation au cours du temps de la grandeur de sortie du capteur soit représentative du balayage de la surface de la came à trois dimensions ; un tel dispositif pourrait être utilisé par exemple pour la reproduction ou la copie d'une pièce de forme complexe, soit à partir de la pièce elle-même, si elle est de forme sensiblement cylindrique, soit à partir d'un modèle cylindrique de la pièce, ou d'un modèle plan, mais suffisamment souple pour pouvoir être appliqué sur une surface rigide cylindrique.

**Revendications**

1. Elément hydromécanique de régulateur d'une turbomachine comportant un dispositif de commande d'une came à trois dimensions, utilisable notamment comme partie d'un calculateur d'une fonction de deux grandeurs résultant de plusieurs variables de la turbomachine, cette came étant matérialisée par les reliefs d'une surface sensiblement cylindrique solidaire, d'une part, d'un moyen actionné par des moyens moteurs produisant un déplacement indépendant de la came en rotation autour de l'axe longitudinal du dispositif, en regard d'au moins un palpeur (10a, 10b, 10c, 10d ; 10) sous l'influence d'une première grandeur et, d'autre part, d'un moyen actionné par des moyens moteurs produisant un déplacement indépendant de la came en translation dans la direction dudit axe sous l'influence d'une deuxième grandeur, lesdits moyens moteurs comportant un vérin ayant une tige centrale (1) le traversant complètement et en appui en ses deux extrémités sur la structure fixe environnante (2a, 2b ; 9, 9A, 9a, 9b, 9c, 12, 13), caractérisé en ce que la surface cylindrique matérialisant la came est constituée par la surface externe d'un corps de vérin linéaire (4) composant avec un vérin rotatif (3) disposé à l'intérieur du corps du vérin linéaire (4) auquel il sert de piston et à l'intérieur duquel il délimite deux chambres étanches (4A, 4B), un vérin à fluide de type composite qui constitue lesdits moyens moteurs et ladite tige centrale fixe (1) étant commune et supportant les corps des deux vérins (3, 4), que le corps du vérin rotatif (3) et le corps du vérin linéaire (4) sont solidarisés en rotation au moyen d'une clavette (5) et d'une rainure qui laissent aux deux corps de vérin (3, 4) une liberté de translation relative, que le corps du vérin rotatif (3) est immobilisé en translation par rapport à la tige centrale fixe (1) au moyen de cloisons radiales (1a, 1b) en nombre pair, solidaires de la tige centrale, prenant appui sur les parois extrêmes du corps du vérin rotatif (3) et délimitant avec des cloisons radiales (3a, 3b) solidaires du corps du vérin rotatif (3), disposées alternativement, des chambres de commande étanches (3A, 3B, 3C, 3D) en nombre égal au nombre de cloisons (1a, 1b, 3a, 3b) et en ce que des moyens associés (7x, 7y) commandent de manière indépendante respectivement des moyens d'alimentation (6A, 6B, 8A, 8B) en fluide, d'une part, vers lesdites chambres de commande (3A à 3D) du vérin rotatif (3) et, d'autre part, vers lesdites chambres (4A, 4B) du vérin linéaire (4), lesdits moyens d'alimentation (6A, 6B, 8A, 8B) étant des canalisations reliant lesdites chambres (3A à 3D, 4A, 4B) sélectivement avec une source (S) de fluide sous pression ou avec une conduite (V) de vidange et acheminant le fluide entièrement au travers de la tige centrale fixe (1).

2. Elément hydromécanique de régulateur selon la revendication 1, caractérisé en ce que le corps (3) du vérin rotatif comporte une paire de cloisons radiales (3a, 3b) et la tige centrale (1) une paire de cloisons radiales (1a, 1b) de manière à délimiter quatre chambres de commande (3A, 3B, 3C, 3D).

3. Elément hydromécanique de régulateur selon l'une quelconque des revendications 1 et 2, caractérisé en ce que le palpeur (10) comporte une tige (10A) montée coulissante dans une direction radiale fixe par rapport à la tige centrale (1), rappelée élastiquement pour suivre le profil de la came.

4. Elément hydromécanique de régulateur selon l'une quelconque des revendications 1 et 2, caractérisé en ce que le palpeur comporte un levier (10B), articulé autour d'un axe fixe, par rapport à la tige centrale (1), levier rappelé élastiquement pour suivre le profil de la came.

5. Elément hydromécanique de régulateur selon la revendication 3 ou la revendication 4, caractérisé en ce que la tige coulissante (10A) ou le levier (10B) actionne un transducteur transformant ses déplacements rectilignes en une autre grandeur physique de nature appropriée.

**Claims**

1. Hydro-mechanical element for a regulator of a turbo jet engine comprising a control device with a three-dimensional cam, capable of use in particular as a part of a function calculator for two values derived from several variables of the turbo-jet engine, the cam being produced by reliefs of a substantially cylindrical surface rigid, on the one hand, with means actuated by motor means producing a rotary displacement independent of the cam about the longitudinal axis of the device, opposed to at least one sensor (10a, 10b, 10c, 10d ; 10) under the influence of a first value and, on the other hand, with means actuated by motor means producing a translatory displacement independent of the cam in the direction of the said axis under the influence of a second value, the said motor means comprising an actuator having a central rod (1) passing completely through it and contacting at its two ends the fixed surrounding structure (2a, 2b ; 9, 9A, 9a, 9b, 9c, 12, 13), characterized in that the cylindrical surface forming the cam is constituted by an external surface of a body of a linear actuator (4) compounded with a rotary actuator (3) disposed within the interior of the linear actuator (4) for which it serves as the piston and within which it defines two sealed chambers (4A, 4B), a fluid actuator of composite type which forms the said motor means and the said fixed central rod (1) being common with and supporting the bodies of the two actuators (3, 4), that the body of the rotary actuator (3) and the body of the linear actuator (4) are fast for rotation by means of a key (5) and a groove which enables for the two bodies of the actuator (3, 4) a relative freedom for translatory motion, that the body of the rotary actuator (3) is fixed in translatory movement with respect to the central fixed rod (1) by means of radial walls (1a, 1b) two in number, rigid with the central rod, being in contact with the end walls of the rotary actuator (3) and defining with the radial walls (3a, 3b) rigid with the body of the rotary actuator (3), arranged alternately, fluid-tight control chambers (3A, 3B, 3C, 3D) in a number equal to the number of walls (1a, 1b, 3a, 3b) and in that associated means (7x, 7y) control in an independent manner respectively supply means (6A, 6B, 8A, 8B) with fluid, on the one hand, to the said control chambers (3A to 3D) of the rotary actuator (3) and, on the other hand, to the said chambers (4A, 4B) of the linear actuator (4), the said supply means (6A, 6B, 8A, 8B) being passages interconnecting the said chambers (3A to 3D, 4A, 4B) selectively with a source (S) of pressure fluid or with a discharge duct (V) and directing the fluid entirely through the central fixed rod (1).

2. Hydro-mechanical regulator element according to claim 1, characterized in this that the body (3) of the rotary actuator comprises a pair of radial partitions (3a, 3b) and the central rod (1) a pair of radial partitions (1a, 1b) in such a manner as to define four control chambers (3A, 3B, 3C, 3D).

3. Hydro-mechanical regulator element according to any one of claims 1 and 2, characterized in that the sensor (10) comprises a rod (10A) slidably mounted in a radial direction fixed with respect to the central rod (1), resiliently biased so as to follow the profile of the cam.

4. Hydro-mechanical regulator element according to any one of claims 1 and 2, characterized in that the sensor comprises a lever (10B), pivoted about a fixed axis, with respect to the central rod (1), the lever being resiliently biased so to follow the profile of the cam.

5. Hydro-mechanical regulator element according to claim 3 or claim 4, characterized in this that the sliding rod (10A) or the lever (10B) actuates a transducer transforming the rectilinear displacements into a physical value of appropriate character.

**Patentansprüche**

1. Hydromechanisches Steuerelement für eine Turbomaschine, mit einer Steuervorrichtung für einen dreidimensionalen Nocken, der insbesondere als Teil eines Rechners für eine Funktion zweier Größen verwendbar ist, die sich aus mehreren Variablen der Turbomaschine ergeben, wobei der Nocken durch Reliefs einer im wesentlichen zylindrischen Fläche gestaltet ist, die fest verbunden ist, zum einen mit einer Einrichtung, welche durch eine Antriebseinrichtung betätigt wird, die eine von dem um die Längsachse der Vorrichtung sich drehenden Nocken unabhängige Verschiebung in Bezug auf mindestens einen Tastkopf (10a, 10b, 10c, 10d ; 10) unter dem Einfluß einer ersten Größe erzeugt, und zum anderen mit einer durch die Antriebseinrichtung betätigten Einrichtung, die eine von dem Nocken bei der Translationsbewegung unabhängige Verschiebung in der Richtung der Achse unter dem Einfluß einer zweiten Größe hervorruft, wobei die Antriebseinrichtung einen Stellantrieb mit einer ihn vollständig durchsetzenden Mittelstange (1), die an ihren beiden Enden an der feststehenden Umgebungsanordnung (2a, 2b ; 9, 9A, 9a, 9b, 9c, 12, 13) abgestützt ist, aufweist, dadurch gekennzeichnet, daß die den Nocken gestaltende zylindrische Fläche durch die Außenfläche eines Körpers eines Linear-Stellantriebs (4) gebildet ist, der mit einem Rotations-Stellantrieb (3) im Innern des Körpers des Linear-Stellantriebs (4), in dem er als Kolben dient und in dessen Innenraum er zwei abgeschlossene Kammern (4A, 4B) begrenzt, einen zusammengesetzten Stellantrieb bildet, der die Antriebseinrichtung bildet und dessen feststehende Mittelstange (1) gemeinsam ist und die Körper der beiden Stellantriebe (3, 4) trägt, daß der Körper des Rotations-Stellantriebs (3) und der Körper des Linear-Stellantriebs (4) mittels einer Paßfeder und einer Nut drehfest miteinander verbunden sind, wobei diese den beiden Körpern der Stellantriebe (3, 4) eine Bewegungsfreiheit für eine relative Translationsbewegung belassen, daß der Körper des Rotations-Stellantriebs (3) für eine Translationsbewegung gegenüber der feststehenden Mittelstange (1) mittels paarweise vorgesehener radialer Trennwände (1a, 1b) unbeweglich ist, die mit der Mittelstange fest verbunden sind, sich an den Außenwänden des Körpers des Rotations-Stellantriebs (3) abstützen und mit mit dem Körper des Rotations-Stellantriebes (3) fest verbundenen radialen Trennwänden (3a, 3b), die wechselweise angeordnet sind, abgedichtete Steuerkammern (3A, 3B, 3C, 3D) begrenzen, deren Anzahl gleich der Anzahl der Trennwände (1a, 1b, 3a, 3b) ist, und daß zugehörige Einrichtungen (7x, 7y) in jeweils unabhängiger Weise Fluid-Speiseeinrichtungen (6A, 6B, 8A, 8B) steuern zum einen in Richtung zu den Steuerkammern (3A bis 3D) des Rotations-Stellantriebs (3) und zum anderen in Richtung zu den Kammern (4A, 4B) des Linear-Stellantriebs (4) wobei die Speiseeinrichtungen (6A, 6B, 8A, 8B) Leitungen sind, welche die Kammern (3A bis 3D, 4A, 4B) selektiv mit einer Druckfluidquelle (S) oder mit einer Ablaßleitung (V) verbinden und das gesamte Fluid durch die feststehende Mittelstange (1) leiten.

2. Hydromechanisches Steuerelement nach Anspruch 1, dadurch gekennzeichnet, daß der Körper (3) des Rotations-Stellantriebs ein Paar von radialen Trennwänden (3a, 3b) aufweist und daß die Mittelstange (1) ein Paar von radialen Trennwänden (1a, 1b) aufweist, derart, daß vier Steuerkammern (3A, 3B, 3C, 3D) begrenzt sind.

3. Hydromechanisches Steuerelement nach einem der Ansprüche 1 und 2, dadurch gekennzeichnet, daß der Tastkopf (10) eine Stange (10A) enthält, die in einer radialen in Bezug auf die Mittelstange (1) festliegenden Richtung verschiebbar angeordnet ist und zur Verfolgung des Profils des Nockens elastisch vorgespannt ist.

4. Hydromechanisches Steuerelement nach einem der Ansprüche 1 und 2, dadurch gekennzeichnet, daß der Tastkopf einen Hebel (10B) enthält, der um eine feststehende Achse gegenüber der Mittelstange (1) verschwenkbar ist und zur Verfolgung des Profils des Nockens elastisch vorgespannt ist.

5. Hydromechanisches Steuerelement nach Anspruch 3 oder 4, dadurch gekennzeichnet, daß die verscheibbare Stange (10A) oder der Hebel (10B) auf einen Umsetzer einwirkt, der deren bzw. dessen geradlinige Verschiebungen in eine andere physikalische Größe geeigneter Art umsetzt.

FIG.: 1

FIG.: 2

FIG.: 3

FIG: 4